# EUROPEAN PATENT APPLICATION

(11) **EP 1 967 889 A2**
(43) Date of publication of application: **10.09.2008**
(21) Application number: 08101829.3
(22) Date of filing: 21.02.2008
(51) Int. Cl.: G02B 26/12, B41J 2/44, G03G 15/00, G06K 15/00

(54) **Image forming apparatus and light scanning unit thereof**

(30) Priority: 06.03.2007 KR 20070021996
(71) Applicant: Samsung Electronics Co., Ltd., Suwon-si, Gyeonggi-do 442-742 (KR)
(72) Inventor: Lee, Tae Kyoung, Bundang-gu, Gyeonggi-do, Seongnam-si (KR)
(74) Representative: Waddington, Richard

(57) **Abstract**

An image forming apparatus including a photosensitive member (21) on which an electrostatic latent image is formed, a light scanning unit (30) to scan a light beam onto the photosensitive member (21) so as to form an electrostatic latent image, a developing unit (20) to apply developer onto the photosensitive member (21) formed with the electrostatic latent image, so as to form a visible image, and a transfer unit (14) to transfer the visible image, formed on the photosensitive member (21), onto a printing surface. The light scanning unit (30) includes a case (31) having a light emitting window (31 a) to emit a light beam toward the photosensitive member (21), a light source (34) installed in the case (31) to generate the light beam, a polygon mirror (42) to deflect the light beam generated from the light source (34) toward the light emitting window (31 a), a rotor (46) coupled with the polygon mirror (42) to rotate the polygon mirror (42), a stator (43) fixed to the case (31) and adapted to rotate the rotor (46) via electromagnetic interaction with the rotor (46), and a stop-position controller to control a stop position of the rotor (46) so that the polygon mirror (42) does not reflect the light beam through the light emitting window (31 a) when the polygon mirror (42) stops rotating.

## Description

### BACKGROUND OF THE INVENTION

### 1. Field of the Invention

Aspects of the present invention relate to an image forming apparatus, and, more particularly, to an electro-photographic image forming apparatus and a light scanning unit included in the image forming apparatus.

### 2. Description of the Related Art

Generally, an image forming apparatus is an apparatus to develop a black-and-white image and/or a color image on a printing medium, such as a sheet of paper, on the basis of an image signal. Examples of image forming apparatuses include a laser printer, an ink-jet printer, a copying machine, a multi-function machine, a facsimile, etc. Representative image forming methods employed in these various kinds of image forming apparatuses include, for example, an electro-photographic method and an ink-jet method. In the electro-photographic method, a light beam is scanned onto a photosensitive member so as to form an electrostatic latent image. A developing agent such as toner is attached onto the electrostatic latent image to transfer the electrostatic latent image onto a printing medium. In the ink-jet method, liquid-phase ink is injected onto the surface of a printing medium on the basis of an image signal.

Specifically, in the case of an electro-photographic image forming apparatus, after the surface of a photosensitive member is electrically charged with a predetermined electric potential, a light beam is scanned onto the photosensitive member so as to form an electrostatic latent image based on the generation of a potential difference. Subsequently, a developing agent such as toner is attached onto the electrostatic latent image to form a visible image. Then, the visible image is transferred from the photosensitive member onto a printing medium. Then, heat and pressure are applied to the printing medium via a fixing unit so as to fix the visible image onto the surface of the printing medium.

The above described electro-photographic image forming apparatus comprises a light scanning unit to scan a light beam onto the photosensitive member on the basis of an image signal. The light beam forms an electrostatic latent image on the surface of the photosensitive member. The light scanning unit includes a light source to generate a light beam on the basis of an image signal. A collimator lens collimates the beam emitted from the light source into a beam parallel to an optical axis. A cylindrical lens refracts the parallel beam, having passed through the collimator lens, into a linear beam horizontal to a sub-scanning direction. A polygon mirror deflects the horizontal linear beam, having passed through the cylindrical lens, within a predetermined angular range. An F-theta lens scans the deflected beam, reflected from the polygon mirror, onto the photosensitive member at a constant speed. A synchronous detecting mirror reflects a portion of the light beam which passes through the F-theta lens to a synchronous detecting sensor to detect a synchronous signal. The above mentioned constituent elements are installed in a single case, which is sealed by a cover. The case has a light emitting window, through which the light beam, having passed through the F-theta lens, is emitted toward the photosensitive member.

Recently, for the sake of stability of the image forming apparatus, a variety of technologies have been proposed to prevent a light beam which is generated from the light source from being emitted to the outside of the case of the light scanning unit when a printing operation is suspended. For example, Japanese Patent Laid-open Publication No. 2000-0231244 (filed on February 17, 1998) discloses a laser scanning unit of an image forming apparatus in which an opening/closing shutter is mounted to a light emitting window to directly intercept a laser beam.

However, in the case of the conventional laser scanning unit, in addition to mounting the laser beam intercepting shutter to a case such that the shutter is selectively opened or closed, a device for opening or closing the shutter should be further mounted. Therefore, the overall configuration of the laser scanning unit and the image forming apparatus becomes complicated, resulting in a difficulty in the design of products.

### SUMMARY OF THE INVENTION

Aspects of the present invention provide an image forming apparatus which has a simplified structure and which prevents a light beam generated during suspension of a printing operation from being emitted to the outside of a case of a light scanning unit, and a light scanning unit included in the image forming apparatus.

Additional aspects and/or advantages of the invention will be set forth in part in the description which follows and, in part, will be obvious from the description, or may be learned by practice of the invention.

According to the present invention there is provided an apparatus and method as set forth in the appended claims. Other features of the invention will be apparent from the dependent claims, and the description which follows.

In accordance with an aspect of the invention, an image forming apparatus is provided with a photosensitive member on which an electrostatic latent image is formed; a light scanning unit, including a case having a light emitting window to emit a light beam toward the photosensitive member, a light source installed in the case to generate the light beam, a polygon mirror to deflect the light beam generated from the light source toward the light emitting window, a rotor coupled with the polygon mirror to rotate the polygon mirror, a stator fixed to the case and adapted to rotate the rotor via electromagnetic interaction with the rotor, and a stop-position controller to control a stop position of the rotor so that the polygon mirror does not reflect the light beam through the light emitting window when the polygon mirror stops rotating; a developing unit to apply developer onto the photosensitive member so as to form a visible image; and a transfer unit to transfer the visible image formed on the photosensitive member onto a printing surface.

Preferably, the stop-position controller magnetically controls the stop position of the rotor.

Preferably, the stop-position controller includes a core included in the stator and having a plurality of poles; and a magnet included in the rotor and having a plurality of polarities to generate an electromagnetic field between the magnet and the plurality of poles to rotate the rotor.

Preferably, the rotor includes a magnet to electromagnetically interact with the stator, and the stop-position controller includes a fixed-position magnet fixed to the case so as to magnetically interact with the magnet of the rotor to control the stop position of the rotor.

Preferably, the fixed-position magnet is an electromagnet.

Preferably, the rotor includes a rotor housing surrounding the stator and having an outwardly extending flange formed along an outer periphery of the rotor housing, the magnet of the rotor being fixed to the rotor housing; and the fixed-position magnet includes a holding extension configured to prevent the rotor housing from being separated from an installed position thereof when being moved upward.

Preferably, the rotor includes a rotor housing surrounding the stator and a magnetic piece coupled to an outer surface of the rotor housing, and the stop-position controller includes a fixed-position magnet fixed to the case so as to magnetically interact with the magnetic piece, to control a stop-position of the rotor housing.

Preferably, the stop-position controller includes a fixed-position disc having a magnetic portion and a non-magnetic portion and coupled to the rotor, and a fixed-position magnet fixed to the case and adapted to magnetically interact with the magnetic portion of the fixed-position disc.

Preferably, the fixed-position disc has a surface area larger than a surface area of the polygon mirror and is installed below the polygon mirror so that the surface area of the fixed-position disc entirely covers the surface area of the polygon mirror.

In accordance with another aspect of the invention, a light scanning unit for an image forming apparatus is provided with a case having a light emitting window to emit a light beam; a light source installed in the case to generate the light beam; a polygon mirror to deflect the light beam generated from the light source toward the light emitting window; a rotor coupled with the polygon mirror to rotate the polygon mirror; a stator fixed to the case and adapted to rotate the rotor via electromagnetic interaction with the rotor; and a stop-position controller to control a stop position of the rotor so the polygon mirror does not reflect the light beam through the light emitting window when the polygon mirror stops rotating.

In addition to the example embodiments and aspects as described above, further aspects and embodiments will be apparent by reference to the drawings and by study of the following descriptions.

### BRIEF DESCRIPTION OF THE DRAWINGS

A better understanding of the present invention will become apparent from the following detailed description of example embodiments and the claims when read in connection with the accompanying drawings, all forming a part of the disclosure of this invention. While the following written and illustrated disclosure focuses on disclosing example embodiments of the invention, it should be clearly understood that the same is by way of illustration and example only and that the invention is not limited thereto.

The spirit and scope of the present invention are limited only by the terms of the appended claims. The following represents brief descriptions of the drawings, wherein:
FIG. 1 is a side sectional view schematically illustrating an image forming apparatus in accordance with an example embodiment of the present invention;
FIG. 2 is a plan view schematically illustrating the light scanning unit for the image forming apparatus illustrated in FIG. 1;
FIG. 3 is a plan view illustrating a polygon mirror assembly for the image forming apparatus illustrated in FIG. 1;
FIG. 4A is a plan view illustrating the partial configuration of the polygon mirror assembly shown in FIG. 3;
FIG. 4B is a bottom view illustrating a rotor of the polygon mirror assembly shown in FIG. 3;
FIG. 5 is a perspective view illustrating a polygon mirror assembly for the image forming apparatus in accordance with another example embodiment of the present invention;
FIG. 6 is a perspective view illustrating a polygon mirror assembly for the image forming apparatus in accordance with yet another example embodiment of the present invention;
FIG. 7A is a perspective view illustrating a polygon mirror assembly for the image forming apparatus in accordance with yet another example embodiment of the present invention; and
FIG. 7B is a perspective view illustrating a fixed-position disc of the polygon mirror assembly shown in FIG. 7A.

### DETAILED DESCRIPTION OF THE EMBODIMENTS

Reference will now be made in detail to the present embodiments of the present invention, examples of which are illustrated in the accompanying drawings, wherein like reference numerals refer to the like elements throughout. The embodiments are described below in order to explain the present invention by referring to the figures.

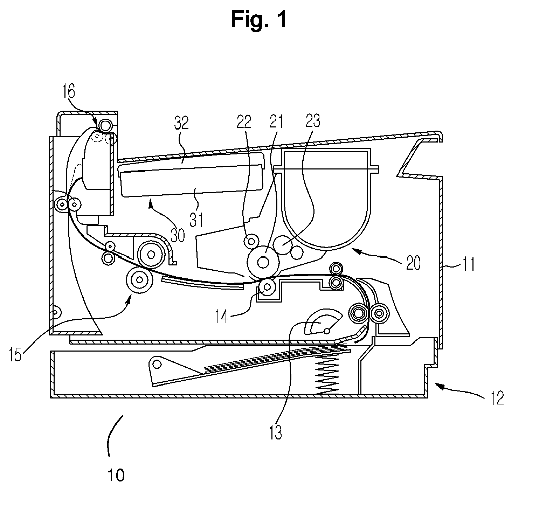

FIG. 1 shows an image forming apparatus 10 in accordance with an example embodiment of the present invention. The image forming apparatus 10 includes a body 11 defining the outer appearance of the image forming apparatus 10. Printing media, such as sheets of paper, transparency sheets, etc., are loaded into a printing medium loading unit 12. A pickup unit 13 picks up the printing media loaded in the printing medium loading unit 12 one by one. A developing unit 20 forms a visible image by use of a developing agent. A light scanning unit 30 generates a light beam on the basis of an image signal. A transfer unit 14 transfers the visible image, formed on the developing unit 20, onto a printing surface, such as the printing medium, an intermediate transfer belt (ITB), etc. A fixing unit 15 fixes the visible image transferred on each printing medium. A printing medium discharge unit 17 discharges the completely printed printing medium to the outside. The developing unit 20 includes a photosensitive member 21 to form an electrostatic latent image thereon upon receiving the beam scanned from the light scanning unit 30, an electric charger 22 to electrically charge a surface of the photosensitive member 21 with a predetermined electric potential, and a developing agent feeder 23 to apply a developing agent, such as developer, to the photosensitive member 21.

In the image forming apparatus 10 according to aspects of the present invention, when the image forming apparatus 10 begins a printing operation, the pickup unit 13 is operated to pick up individual sheets of printing media loaded in the printing medium loading unit 12 one by one, so as to move each printing medium to the developing unit 20. In this case, a light beam based on an image signal, for example, an image signal transmitted from an external device such as a host computer, is generated from the light scanning unit 30 and irradiated onto the surface of the photosensitive member 21 that was previously electrically charged by the electric charger 22 with a predetermined electric potential. The light beam forms an electrostatic latent image on the surface of the photosensitive member 21. Then, as toner particles are attached to the region of the electrostatic latent image by the developing agent feeder 23, a visible image made of any of various kinds of printing substances, such as a printing powder, is formed. The formed visible image is transferred onto a surface of the printing medium. Thereafter, the transferred image is fixed on the surface of the printing medium while the printing medium passes through the fixing unit 15. Finally, the printing medium, printed with the image, is discharged out of the body 11 of the image forming apparatus 10 by the printing medium discharge unit 16.

The above described printing operation is similar to that of a printing operation used by a conventional electro-photographic image forming apparatus. The image forming apparatus according to aspects of the present invention includes the same constituent elements as those of the conventional image forming apparatus, except for the light scanning unit 30. Accordingly, in the following descriptions of the image forming apparatus according to aspects of the present invention, a detailed description of other constituent elements except for the light scanning unit 30 will be omitted.

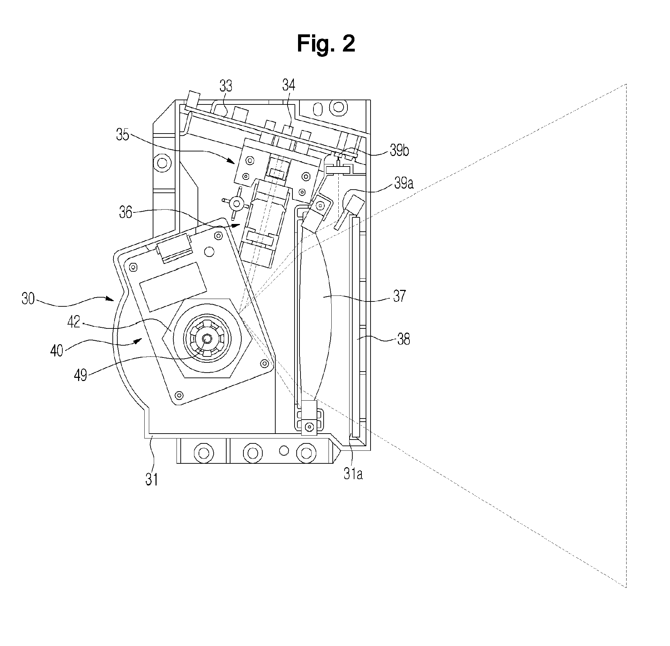

As shown in FIG. 2, the light scanning unit 30 includes a case 31 having a light emitting window 31 a, through which a light beam is emitted to the outside. The case 31 may take many different shapes, such as rectangular, square, circular, or a combination of different shapes. A cover 32 (FIG. 1) covers the case 31. A light source 34 mounted on a substrate 33 is fixed to a side of the case 31. A collimator lens assembly 35 includes a collimator lens to collimate the light beam emitted from the light source 34. A cylindrical lens assembly 36 is disposed next to the collimator lens assembly 35 to change the collimated light beam into a linear beam. A polygon mirror assembly 40 includes a polygon mirror 42 to deflect the collimated light beam. The collimated light passes through an F-theta lens 37 and a reflective mirror 38. A portion of the deflected light beam is deflected by a synchronous detecting mirror 39a towards a synchronous detecting sensor 39b to detect a synchronous signal.

According to the light scanning unit 30 having the above described configuration, when a light beam is generated from the light source 34 on the basis of an image signal, the beam is changed into a beam parallel to an optical axis while passing through the collimator lens assembly 35. Then, the parallel beam, having passed through the collimator lens assembly 35, is changed into a linear beam horizontal to a sub-scanning direction while passing through the cylindrical lens assembly 36. In sequence, the beam, having passed through the cylindrical lens assembly 36, is deflected toward the light emitting window 31 a by a predetermined angular range by the polygon mirror 42 of the polygon mirror assembly 40. Also, the beam reflected by the polygon mirror 42 is scanned toward the photosensitive member 21 (FIG. 1) by the F-theta lens 37 at a constant speed.

According to an aspect of the present invention, the beam which was deflected by the rotating polygon mirror 42 and passed through the F-theta lens 37 is emitted through the light emitting window 31 a by operation of the reflective mirror 38 to thereby be irradiated onto the photosensitive member 21. However, a part of the beam is reflected to the synchronous detecting sensor 39b by the synchronous detecting mirror 39a and another part of the beam is intercepted by the case 31.

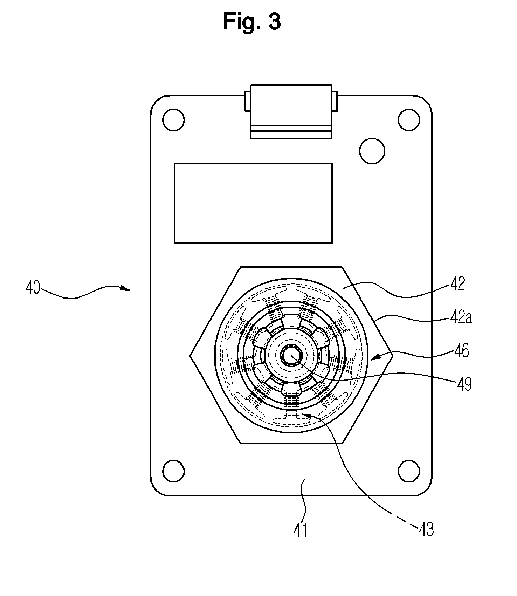

As shown in FIG. 3, the polygon mirror assembly 40 includes a base plate 41 fixed to a side of the case31 (FIG. 2) and the polygon mirror 42 which is rotatably mounted on the base plate 41 and has a plurality of reflective facets 42a to deflect the beam within a predetermined angular range. A stator 43 is mounted on the base plate 41 at a fixed position. Also, a rotor 46 is rotatably mounted at the upper side of the stator 43. The polygon mirror 42 is fixed to the rotor 46. The rotor 46 is coupled to a rotating shaft 49 that is rotatably mounted to the base plate 41, so as to rotate along with the rotating shaft 49 at a high speed.

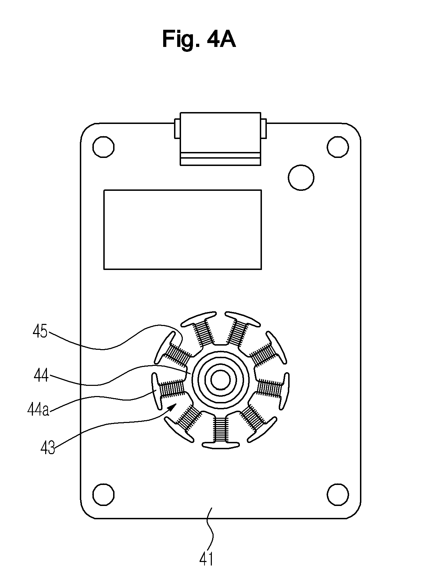

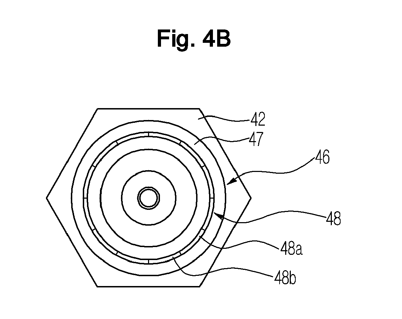

As shown in FIG. 4A, the stator 43 includes a core 44 having a plurality of poles 44a, also called protrusions, and coils 45 wound on the core 44 to correspond to the respective poles 44a. As shown in FIG. 4B, the rotor 46 includes a rotor housing 47 surrounding the stator 43, (FIG. 4A), the polygon mirror 42 fixed to the rotor housing 47, and a ring-shaped magnet 48 disposed in the rotor housing 47 and having a plurality of N-poles 48a and S-poles 48b. It is understood that the stator 43 and rotor 46 are not limited to the configurations shown in FIGs. 4A and 4B, respectively. For example, the stator 43 may have a different number of poles 44a than those shown in FIG. 4A, the magnet 48 may have a different number of N-poles 48a and S-poles 48b, etc.

In the polygon mirror assembly 40 having the above described configuration, when electric power is applied to the respective coils 45, an electromagnetic field is generated between the respective poles 44a and the magnet 48 facing the poles 44a, thus causing the rotor 46 and the polygon mirror 42 to rotate at a high speed. When the supply of power to the respective coils 45 is turned off the rotor 46 stops at a specific position. In such a stop position of the rotor 46, the beam reflected by the polygon mirror 42 is reflected to a position which is deviated from the light emitting window 31 a. According to an aspect of the present invention, the stop position of the rotor 46 can be controlled by adjusting the installation position of the respective poles 44a of the core 45 and the arrangement of the N-poles 48a and the S-poles 48b of the magnet 48. It is understood that the stop position of the rotor 46 can be adjusted to deviate the beam from the light emitting window 31 a across a wide angular range. For example, the stop position of the rotor 46 can be adjusted to deviate the beam slightly from the light emitting window 31 a, or deviate the beam substantially from the light emitting window 31 a.

Accordingly, once the rotor 46 and the polygon mirror 42 stop in correspondence with the stopping of the printing operation of the image forming apparatus 10, even if a light beam is generated from the light source 34 after the stopping, for example, by a malfunction of the light source 34, the beam is advanced to a position deviated from the light emitting window 31 a by the polygon mirror 42. Therefore, the light beam cannot be emitted to the outside of the case 31 through the light emitting window 31 a even when the light beam is generated after the printing operation is stopped.

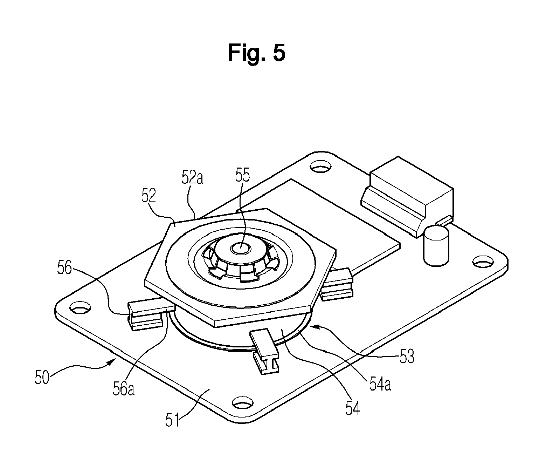

FIG. 5 illustrates a polygon mirror assembly 50 for use in the image forming apparatus 10 in accordance with another example embodiment of the present invention. The image forming apparatus 10 as shown in FIG. 5 has substantially the same configuration as that of the previously described in connection with FIG. 1, except for certain constituent elements of the polygon mirror assembly 50. For example, the polygon mirror assembly 50, shown in FIG. 5, has the same configuration and constituent elements which are designated by the same reference numerals as those of the polygon mirror assembly 40 shown in FIG. 3.

As shown in FIG. 5, the polygon mirror assembly 50 includes a base plate 51, a polygon mirror 52 having a plurality of reflective facets 52a, a stator 43 (FIG. 3) mounted on the base plate 51 at a fixed position, a rotor 53 coupled with the polygon mirror 52 and adapted to rotate by an electromagnetic force generated via interaction with the stator 43, a rotating shaft 55 to rotatably support the rotor 53, and a plurality of fixed-position magnets 56 arranged around the rotor 53.

The rotor 53 includes a rotor housing 54 to receive the magnet 48 (FIG. 4B) therein. The polygon mirror 52 is fixed to the rotor housing 54, for example, by screws, fasteners, etc. The rotor housing 54 has an outwardly extending flange 54a formed at a lower periphery thereof. According to an aspect of the present invention, the rotor housing 54 is made of a non-magnetic material having little to no effect on a magnetic field generated between the magnet 48 and the fixed-position magnets 56.

The plurality of fixed-position magnets 56 magnetically interacts with the magnet 48 installed in the rotor housing 54. Accordingly, when the rotor 53 stops, the fixed-position magnets 56 act as a stop-position controller to control the stop positions of the rotor 53 and the polygon mirror 52. When the rotor 53 and the polygon mirror 52 stop at specific positions by the magnet 48 of the rotor 53 and the fixed-position magnets 56, the beam reflected from the polygon mirror 52 is advanced to a position deviated from the light emitting window 31 a (FIG. 2) formed at the case 31 (FIG. 2).

According to an aspect of the present invention, the fixed-position magnets 56 are embodied as electro-magnets so as not to interrupt the rotor 53 during rotation of the rotor 53. When the rotor 53 stops, the fixed-position magnets 56 have a magnetic effect on the rotor 53. The upper ends of each of the respective plurality of fixed-position magnets 56 are formed to have holding extensions 56a extending toward the rotor housing 54. When the rotor housing 54 is moved by an upward force, the flange 54a of the rotor housing 54 is blocked by the holding extensions 56a of the fixed-position magnets 56. Accordingly, the holding extensions 56a serve to prevent the rotor 53 from being separated from the installed position thereof.

According to aspects of the present invention, the number and/or installation positions of the fixed-position magnets are not limited to the number and/or installation positions of the four fixed-position magnets 56 spaced apart from each other at right angles as shown in FIG. 5. It is further understood that the holding extensions 56a may have various different shapes and may differ in number and size from the number and size shown in FIG. 5, and are not required to be formed on upper ends of the respective fixed-position magnets 56.

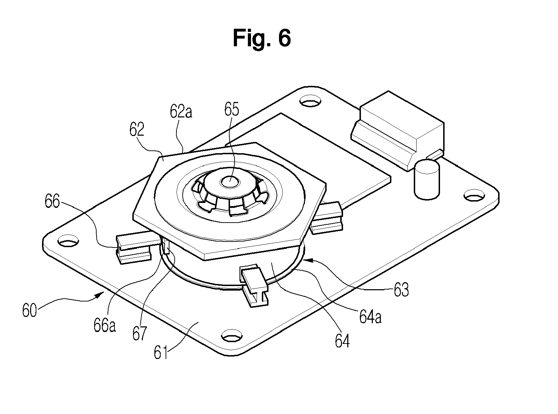

FIG. 6 illustrates a polygon mirror assembly 60 for use in the image forming apparatus 10 in accordance with yet another example embodiment of the present invention. The image forming apparatus 10, shown in FIG. 6, has substantially the same configuration as that of the previously described in connection with FIG. 1, except for certain constituent elements of the polygon mirror assembly 60. For example, the polygon mirror assembly 60 has the same configuration and constituent elements which are designated by the same reference numerals as those of the polygon mirror assembly 40 shown in FIG. 3.

As shown in FIG. 6, the polygon mirror assembly 60 includes a base plate 61, a polygon mirror 62 having a plurality of reflective facets 62a, a stator 43 (FIG. 3) mounted on the base plate 61 at a fixed position, a rotor 63 coupled with the polygon mirror 62 and adapted to rotate by an electromagnetic force generated via interaction with the stator 43, a rotating shaft 65 to rotatably support the rotor 63, and a plurality of fixed-position magnets 66 arranged around the rotor 63.

The rotor 63 includes a rotor housing 64 to receive the magnet 48 (FIG. 4B) therein. The polygon mirror 62 is fixed to the rotor housing 64, for example, by screws, fasteners, etc. The rotor housing 64 has an outwardly extending flange 64a formed at a lower periphery thereof. A plurality of magnetic pieces 67 are installed at the outer surface of the rotor housing 64. These magnetic pieces 67 act as a stop-position controller, along with the fixed-position magnets 66, to stop the rotor 63 at a specific position. The plurality of magnetic pieces 67 are made of magnets, ferrous metals, or other magnetically-attractable materials capable of magnetically interacting with the fixed-position magnets.

According to an aspect of the present invention, the plurality of fixed-position magnets 66 are electromagnets so as not to interrupt the rotor 63 during rotation of the rotor 63. When the rotor 63 stops, the fixed-position magnets 66 have a magnetic effect on the rotor 63. The plurality of fixed-position magnets 66 are formed with respective holding extensions 66a extending toward the rotor housing 64. The holding extensions 66a serve to prevent the rotor 63 from being separated from the installed position thereof by locking the flange 64a of the rotor housing 64 into the installed position shown in FIG. 6.

When the rotor 63 stops at a specific position by magnetic interaction between the plurality of magnetic pieces 67 and the fixed-position magnets 66, the light beam reflected by the polygon mirror 62 is advanced to a position which is deviated from the light emitting window 31 a (FIG. 2) of the case 31 (FIG. 2). Therefore, the light beam is not emitted through the light emitting window 31 to the outside of the case 31 (FIG. 2) at all, even when the light source 34 generates the light beam after the printing operation is stopped.

According to aspects of the present invention, the number and/or installation positions of the plurality of magnetic pieces 67 and the plurality of fixed-position magnets 66 are not limited to the illustration and can be changed in various manners.

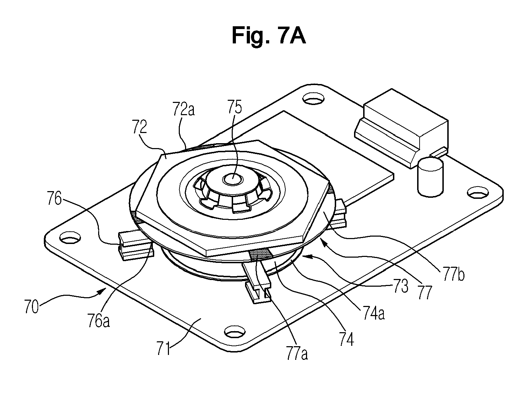

FIG. 7A illustrates a polygon mirror assembly 70 for use in the image forming apparatus 10 in accordance with yet another example embodiment of the present invention. The image forming apparatus 10, shown in FIG. 7A, has substantially the same configuration as that of the previously described in connection with FIG. 1, first embodiment except for certain constituent elements of the polygon mirror assembly 70. For example, the polygon mirror assembly 70 has the same configuration and constituent elements which are designated by the same reference numerals as those of the polygon mirror assembly 40 shown in FIG. 3.

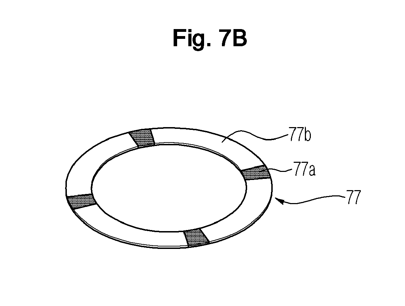

As shown in FIG. 7, the polygon mirror assembly 70 includes a base plate 71, a polygon mirror 72 having a plurality of reflective facets 72a, a stator 43 (FIG. 3) mounted on the base plate 71 at a fixed position, a rotor 73 coupled to the polygon mirror 72 and adapted to rotate by an electromagnetic force generated via interaction with the stator 43, a rotating shaft 75 to rotatably support the rotor 73, and a plurality of fixed-position magnets 76 arranged around the rotor 73.

The rotor 73 includes a rotor housing 74 to receive the magnet 48 (FIG. 4B) therein. The polygon mirror 72 is fixed to the rotor housing 74. The rotor housing 74 has an outwardly extending flange 74a formed at a lower periphery thereof. A fixed-position disc 77 is installed at the upper end of the rotor housing 74 at a position below the polygon mirror 72. The fixed-position disc 77 acts as a stop-position controller, along with the fixed-position magnets 76, to stop the rotor 73 at a specific position.

As shown in FIGs. 7A and 7B, the fixed-position disc 77 includes a plurality of magnetic portions 77a and non-magnetic portions 77b. The plurality of magnetic portions 77a are arranged to correspond to the plurality of fixed-position magnets 76, respectively. According to an aspect of the present invention, the fixed-position disc 77 has a circumferential length, i.e., a surface area, larger than the circumferential length, i.e., surface area, of the polygon mirror 72 and completely covers the polygon mirror 72. Thus, the fixed-position disc 77 has the function of preventing an air stream flowing upward from the base plate 71 from interfering with the reflective facets 72a of the polygon mirror 72. This function therefore prevents impurities contained in the flowing air stream from adhering to the reflective facets 72a of the polygon mirror 72, thereby reducing contamination of the reflective facets 72a.

According to an aspect of the present invention, the fixed-position magnets 76 are electromagnets so as not to interrupt the rotor 73 during a rotation of the rotor 73. When the rotor 73 stops, the fixed-position magnets 76 have a magnetic effect on the rotor 73. Each of the plurality of fixed-position magnets 76 are respectively formed with holding extensions 76a extending toward the rotor housing 74. The holding extensions 76a serve to prevent the rotor 73 from being separated from the installed position thereof by locking the flange 74a of the rotor housing 74 into the installed position.

When the rotor 73 stops at a specific position by a magnetic interaction between the plurality of magnetic portions 77a included in the fixed-position disc 77 and the fixed-position magnets 76, the beam reflected by the polygon mirror 72 is reflected to a position which is deviated from the light emitting window 31 a (FIG. 2) of the case 31) (FIG.2).

According to aspects of the present invention, the number and installation position of the plurality of magnetic portions 77a included in the fixed-position disc 77 and the plurality of fixed-position magnets 76 are not limited to the numbers and positions shown in FIGs. 7A and 7B, and can be changed in various manners.

As is apparent from the above description, according to aspects of the present invention, a rotor 46 of a light scanning unit 30 is controlled to stop at a specific position such that a polygon mirror, such as the polygon mirror 42 (FIG. 3), 52 (FIG. 5), 62 (FIG. 6), or 72 (FIGs. 7A and 7B), which is adapted to rotate together with the rotor 46, reflects a light beam to a position which is deviated from a light emitting window 31 a under the operation of a stop-position controller having a magnetic action. Accordingly, aspects of the present invention prevent a light beam which is generated from a light source 34 during suspension of a printing operation from being emitted to the outside of the light scanning unit 30, resulting in improved stability of the printing operation.

Further, aspects of the present invention do not require a shutter that has been conventionally used to open and close the light emitting window 31 a, resulting in a simplified overall configuration of the light scanning unit 30 and image forming apparatus 10.

While there have been illustrated and described what are considered to be example embodiments of the present invention, it will be understood by those skilled in the art and as technology develops that various changes and modifications, may be made, and equivalents may be substituted for elements thereof without departing from the true scope of the present invention. Many modifications, permutations, additions and sub-combinations may be made to adapt the teachings of the present invention to a particular situation without departing from the scope thereof. For example, the holding extensions 56a shown in FIG. 5 may be altered in shape, number, and/or relative position to the polygon mirror 52. Accordingly, it is intended, therefore, that aspects of the present invention not be limited to the various example embodiments disclosed, but that the present invention includes all embodiments falling within the scope of the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An image forming apparatus comprising:
a photosensitive member (21) on which an electrostatic latent image is formed;
a light scanning unit (30), comprising:
a case (31) having a light emitting window (31 a) to emit a light beam toward the
photosensitive member (21),
a light source (34) installed in the case (31) to generate the light beam,
a polygon mirror (42) to deflect the light beam generated from the light source (34) toward
the light emitting window (31 a),
a rotor (46) coupled with the polygon mirror (42) to rotate the polygon mirror (42),
a stator (43) fixed to the case (31) and adapted to rotate the rotor (46) via electromagnetic interaction with the rotor (46), and
a stop-position controller to control a stop position of the rotor (46) so that the polygon mirror (42) does not reflect the light beam through the light emitting window (31 a) when the polygon mirror (42) stops rotating,
a developing unit (20) to apply developer onto the photosensitive member (21) so as to form a visible image; and
a transfer unit (14) to transfer the visible image formed on the photosensitive member (21), onto a printing surface.

2. The image forming apparatus according to claim 1, wherein the stop-position controller magnetically controls the stop position of the rotor (46).

3. The image forming apparatus according to claim 2, wherein the stop-position controller comprises:
a core (44) included in the stator (43) and having a plurality of poles; and
a magnet (48) included in the rotor (46) and having a plurality of polarities to generate an electromagnetic field between the magnet (48) and the plurality of poles to rotate the rotor (46).

4. The image forming apparatus according to claim 2 or claim 3, wherein:
the rotor (46) comprises a rotor housing surrounding the stator (43) and a magnetic piece (67) coupled to an outer surface of the rotor housing; and
the stop-position controller comprises a fixed-position magnet (76) fixed to the case (31) so as to magnetically interact with the magnetic piece (67) to control a stop-position of the rotor housing.

5. The image forming apparatus according to any one of claims 2 to 4, wherein the stop-position controller comprises:
a fixed-position disc (77) having a magnetic portion (77a) and a non-magnetic portion (77b) and coupled to the rotor (46); and
a fixed-position magnet (76) fixed to the case (31) and adapted to magnetically interact with the magnetic portion (77a) of the fixed-position disc (77).

6. The image forming apparatus according to claim 5, wherein the fixed-position disc (77) has a surface area larger than a surface area of the polygon mirror (42) and is installed below the polygon mirror (42) so that the surface area of the fixed-position disc (77) entirely covers the surface area of the polygon mirror (42).

7. A light scanning unit for an image forming apparatus comprising:
a case (31) having a light emitting window (31 a) to emit a light beam;
a light source (34) installed in the case (31) to generate the light beam;
a polygon mirror (42) to deflect the light beam generated from the light source (34) toward the light emitting window (31 a);
a rotor (46) coupled with the polygon mirror (42) to rotate the polygon mirror (42);
a stator (43) fixed to the case (31) and adapted to rotate the rotor (46) via electromagnetic interaction with the rotor (46); and
a stop-position controller to control a stop position of the rotor (46) so the polygon mirror (42) does not reflect the light beam through the light emitting window (31 a) when the polygon mirror (42) stops rotating.

8. The light scanning unit according to claim 7, wherein the stop-position controller magnetically controls the stop position of the rotor (46).

9. The light scanning unit according to claim 8, wherein the stop-position controller comprises:
a core (44) included in the stator (43) and having a plurality of poles; and
a magnet (48) included in the rotor (46) and having a plurality of polarities to generate an electromagnetic field between the magnet (48) and the plurality of poles to rotate the rotor (46).

10. The light scanning unit according to claim 8 or claim 9, wherein:
the rotor (46) comprises a rotor housing surrounding the stator (43) and a magnetic piece (67) coupled to an outer surface of the rotor housing; and
the stop-position controller comprises a fixed-position magnet (76) fixed to the case (31) so as to magnetically interact with the magnetic piece (67) to control a stop-position of the rotor housing.

11. The light scanning unit according to any one for claims 8 to 10, wherein the stop-position controller comprises:
a fixed-position disc (77) having a magnetic portion (77a) and a non-magnetic portion (77b) and coupled to the rotor (46); and
a fixed-position magnet (76) fixed to the case (31) and adapted to magnetically interact with the magnetic portion (77a) of the fixed-position disc (77).

12. The light scanning unit according to claim 11, wherein the fixed-position disc (77) has a surface area larger than a surface area of the polygon mirror (42) and is installed below the polygon mirror (42) so that the surface area of the fixed-position disc (77) entirely covers the surface area of the polygon mirror (42).

13. An image forming apparatus comprising:
a photosensitive member (21) on which an electrostatic latent image is formed; and
a light scanning unit (30) having a light emitting window (31 a) formed on a side thereof, comprising:
a light source (34) to generate a light beam,
a polygon mirror (42) to deflect the light beam generated from the light source (34) through
the light emitting window (31 a) to the photosensitive member (21),
a magnet (48) attached to the polygon mirror (42) to rotate the polygon mirror (42) via a magnetic force, and
a stop-position controller to stop the polygon mirror (42) at a stop position where the polygon mirror (42) does not reflect the light beam through the light emitting window (31 a), using the magnetic force.

14. The image forming apparatus according to claim 13, wherein the light scanning unit (30) further comprises:
a stator (43) fixed to the laser scanning unit to supply the magnetic force so as to rotate the polygon mirror (42).

15. The image forming apparatus according to claim 14, wherein:
the stop-position controller comprises a core (44) included in the stator (43) and having a plurality of protrusions and coils respectively wrapped around the protrusions through which electricity flows to create the magnetic force;
the magnet (48) attached to the polygon mirror (42) has a plurality of polarities; and
the protrusions and polarities are formed such that when the electricity stops flowing to stop the polygon mirror (42) from rotating after a printing operation, the protrusions and polarities magnetically align to place the polygon mirror (42) in the stop position

16. The image forming apparatus according to any one of claims 13 to 15, wherein the stop-position controller comprises a fixed-position magnet (76) fixed to the laser scanning unit so as to magnetically interact with the magnet (48) to put the polygon mirror (42) in the stop position after the polygon mirror (42) stops rotating from the magnetic force.

17. The image forming apparatus according to any one of claims 13 to 16, further comprising:
a rotor (46) coupled with the polygon mirror (42) to rotate the polygon mirror
(42), the rotor (46) comprising:
a rotor housing (54), and
a magnetic piece (67) coupled to an outer surface of the rotor housing (54); and
wherein the stop-position controller comprises a fixed-position magnet (76) fixed to the laser scanning unit so as to magnetically interact with the magnetic piece (67) to put the polygon mirror (42) in the stop position after the polygon mirror (42) stops rotating from the magnetic force.

18. The image forming apparatus according to any one of claims 13 to 17, wherein the stop-position controller comprises:
a fixed-position disc (77) having a magnetic portion (77a) and a non-magnetic portion (77b) and coupled with the polygon mirror (42); and
a fixed-position magnet (76) fixed to the laser scanning unit and configured to magnetically interact with the magnetic portion of the fixed-position disc (77) to put the polygon mirror (42) in the stop position after the polygon mirror (42) stops rotating from the magnetic force.

19. A method of scanning a light beam to perform a printing operation, comprising:
irradiating the light beam to a polygon mirror (42);
deflecting the irradiated light beam through a light emitting window (31 a) towards a photosensitive medium by rotating a polygon mirror (42) via an electromagnetic force during the printing operation; and
if the printing operation stops, using the electromagnetic force to stop the polygon mirror (42) in a position where the polygon mirror (42) does not reflect the light beam through the light emitting window (31 a).
